# EUROPÄISCHE PATENTANMELDUNG

(11) **EP 4 356 733 A1**
(43) Veröffentlichungstag der Anmeldung: **24.04.2024**
(21) Anmeldenummer: 22202575.1
(22) Anmeldetag: 19.10.2022
(51) Int. Cl.: A01N 31/02, A01N 37/04, A01N 41/04, A01N 37/44, A01P 1/00

(54) **NIEDRIGALKOHOLISCHES DESINFEKTIONSMITTEL**

(71) Anmelder: Bode Chemie GmbH, 22525 Hamburg (DE)
(72) Erfinder: Dr. Eggerstedt, Sven, 22527 Hamburg (DE); Fehling, Stephanie, 25358 Horst (DE)
(74) Vertreter: Patentanwälte Olbricht Buchhold Keulertz

(57) **Zusammenfassung**

Gegenstand der Erfindung ist ein niedrigalkoholisches Desinfektionsmittel mit einem Alkoholgehalt von maximal 50 Gew.-%. Das Desinfektionsmittel hinterlässt auf den desinfizierten Flächen, insbesondere unbelebten Oberflächen, nur geringe Rückstände, da nur wenige nichtflüchtige Bestandteile enthalten sind. Es zeigt zudem eine gute Materialverträglichkeit, insbesondere eine bessere Materialverträglichkeit gegenüber empfindlichen Oberflächen als hochalkoholische Desinfektionsmittel. Das Desinfektionsmittel zeigt ein breites Wirkspektrum und kurze Einwirkzeiten, insbesondere eine gute Viruzidie. Weiterhin ist Gegenstand der Erfindung ein Desinfektionsmittelkonzentrat und die Verwendung des Desinfektionsmittels zur Desinfektion unbelebter Oberflächen.

## Beschreibung

Gegenstand der Erfindung ist ein niedrigalkoholisches Desinfektionsmittel, ein Desinfektionsmittelkonzentrat zur Herstellung des Desinfektionsmittels und die Verwendung des Desinfektionsmittels zur Desinfektion von unbelebten Oberflächen.

Alkohole besitzen eine bekannte bakterizide Wirkung. In herkömmlichen Desinfektionsmitteln werden vor allem Ethanol, 1-Propanol und 2-Propanol als Alkohole verwendet, wobei der Alkoholgehalt der Zubereitungen im Allgemeinen zwischen 60 und 80 % liegt. Der wesentliche Vorteil von Alkoholen ist, dass der Wirkungseintritt gegen Bakterien sehr rasch erfolgt und sie bei der Desinfektion von Flächen rückstandfrei abtrocknen. Eine viruzide Wirksamkeit von kurzkettigen Alkoholen wird zwar diskutiert, ist aber erst bei einer hohen Konzentrationsgrenze nachgewiesen, welche bei Ethanol bei ca. 80 % vermutet wird. Auch bei Konzentrationen von über 80 Vol.-% ist Ethanol nicht gegen alle unbehüllten Viren in ausreichend kurzer Zeit wirksam (Quelle: K.H. Wallhäußer, "Praxis der Sterilisation, Desinfektion und Konservierung", G. Thieme Verlag, Stuttgart, New York, 2008, 6. Auflage, S. 643 - 474.). Üblicherweise werden deshalb den Desinfektionsmitteln weitere antimikrobielle Wirkstoffe zugesetzt, um eine viruzide Wirksamkeit zu erreichen.

Hochalkoholische Desinfektionsmittel mit Alkoholgehalten über 70 % weisen jedoch häufig eine geringe Materialverträglichkeit auf. Bei einem geringen Alkoholgehalt konnte zwar die Materialverträglichkeit verbessert werden, was aber zu einer unzureichenden antimikrobiellen Wirksamkeit führt.

Aus EP 1 020 115 A1 ist ein hochalkoholisches Desinfektionsmittel bekannt, das sich durch viruzide Eigenschaften auszeichnet. Das Desinfektionsmittel enthält 42 bis 47 Gew.-% 1-Propanol, 22 bis 27 Gew.-% 2-Propanol, 4 bis 6 Gew.-% Ethanol, 2-Butanon und mindestens 20 Gew.-% Wasser. Durch den hohen Alkoholgehalt von mindestens 68 Gew.-% wird eine ausreichende Viruzidie bei geringen Rückständen auf einer desinfizierten Oberfläche erreicht. Allerdings ist das Desinfektionsmittel nur für alkoholbeständige Oberflächen geeignet und aufgrund des Alkoholgehalts kennzeichnungspflichtig.

Aufgabe der vorliegenden Erfindung war es, ein materialverträgliches Desinfektionsmittel mit möglichst breitem Wirkspektrum und kurzen Einwirkzeiten (≤ 2 bis 5 min) zu entwickeln. Zudem sollte das Desinfektionsmittel nach Abtrocknung möglichst wenig nichtflüchtigen Rückstand hinterlassen. Diese Aufgaben werden mit einem Desinfektionsmittel nach Patentanspruch 1, einem Desinfektionsmittelkonzentrat nach Patentanspruch 15, einem Trägermaterial nach Patentanspruch 16 und einer Verwendung nach Patentanspruch 17 gelöst.

Bevorzugte Ausführungsformen der Erfindung mit weiteren Vorteilen sind Gegenstand der Unteransprüche oder nachfolgend beschrieben.

Das erfindungsgemäße niedrigalkoholische Desinfektionsmittel, umfasst
- 15 bis 50 Gew.-%, bevorzugt 20 bis 50 Gew.-%, mehr bevorzugt 25 bis 50 Gew.-% mindestens eines einwertigen Alkohols mit 2 bis 4 Kohlenstoffatomen,
- 0,1 bis 3,0 Gew.-%, bevorzugt 0,1 bis 2,0 Gew.-%, mehr bevorzugt 0,1 bis 1,0 Gew.-% mindestens einer Säure mit einem pKs-Wert von kleiner als 2,3 ausgewählt aus der Gruppe bestehend aus organischen Disäuren und organischen Sulfonsäuren, d.h. Alkansulfonsäuren,
- optional mindestens einen Hilfsstoff und
- Wasser.

Die Angaben in Gewichtsprozent (Gew.-%) sind jeweils bezogen auf das Gesamtgewicht des Desinfektionsmittels. Die Gewichtsprozentangaben in Bezug auf Alkohol und Säure beziehen sich auf die Gesamtmenge aller erfindungsgemäßen, zuvor genannten Alkohole bzw. Säuren im Desinfektionsmittel.

Die im Desinfektionsmittel enthaltenen einwertigen Alkohole sind aliphatische Alkohole, sogenannte Alkanole. Das Desinfektionsmittel enthält einen oder mehrere einwertige Alkohole mit 2 bis 4 Kohlenstoffatomen in einer Menge von 15 bis 50 Gew.-%, bevorzugt 20 bis 50 Gew. %, mehr bevorzugt 25 bis 50 Gew.-%, besonders bevorzugt 30 bis 50 Gew.-%, insbesondere von 44 bis 50 Gew.-%, wobei sich die Gewichtsprozentangabe auf die Gesamtmenge aller einwertigen Alkohole im Desinfektionsmittel bezieht.

In einer bevorzugten Ausführungsform enthält das Desinfektionsmittel einen oder mehrere Alkohole ausgewählt aus der Gruppe bestehend aus Ethanol, 1-Propanol (n-Propanol) und 2-Propanol (Isopropanol). Besonders bevorzugt enthält das Desinfektionsmittel als einwertigen Alkohol nur einen einwertigen Alkohol ausgewählt aus Ethanol, 1-Propanol und 2-Propanol oder als einwertige Alkohole eine Mischung von Ethanol, 1-Propanol und 2-Propanol. Wenn nur ein einziger Alkohol eingesetzt wird, kann es sich zum Beispiel um Ethanol oder 1-Propanol handeln.

Das Desinfektionsmittel enthält die Säure(n) bevorzugt in einer Menge von 0,2 bis 3,0 Gew.-%, besonders bevorzugt von 0,2 bis 2,0 Gew.-%, insbesondere von 0,2 bis 1,0 Gew.-%. Dabei bezieht sich die Gewichtsprozentangabe auf die Gesamtmenge aller Säuren aus den zuvor genannten Gruppen. Die Untergrenze für die Säurekonzentration kann vorteilhafterweise auch höher sein und beispielsweise 0,3, 0,4 oder 0,5 Gew.-% betragen.

Die Säure weist bevorzugt einen pKs-Wert von kleiner als 2,0 auf. Der pKs-Wert, der auch als Säurekonstante bezeichnet wird, ist der pK-Wert der Säure, im englischen auch als pKa mit a für "acid" bezeichnet. Der pK-Wert ist definiert als der negative dekadische Logarithmus der Gleichgewichtskonstanten einer chemischen Reaktion. Bei Säuren ist der pKs oder pKa der negative dekadische Logarithmus der Säurekonstanten (pKs = -lg Ks oder pKa = -lg Ka; Ks, Ka = Säure-(Dissoziations-)Konstante). Wasser hat bei Zimmertemperatur einen pK-Wert von 14 (pKw). Bei den organischen Disäuren ist jeweils der pKs-Wert für die erste Dissoziation einer Säuregruppe, der auch als pKs₁ bezeichnet wird, relevant.

Das Desinfektionsmittel enthält bevorzugt eine oder mehrere Säuren ausgewählt aus der Gruppe bestehend aus Maleinsäure ((Z)-2-Butendisäure), Methansulfonsäure, Ethansulfonsäure, 2-Propansulfonsäure, Butansulfonsäure, 1-Propansulfonsäure, Octansulfonsäure, Oxalsäure (Ethandisäure) und Quadratsäure (3,4-Dihydroxycyclobut-3-en-1,2-dion), besonders bevorzugt ausgewählt aus Maleinsäure, Methansulfonsäure, Oxalsäure (Ethandisäure) und Quadratsäure (3,4-Dihydroxycyclobut-3-en-1,2-dion). Maleinsäure weist einen pKs₁-Wert von 1,9 auf, Methansulfonsäure weist einen pKs₁-Wert von -1,9 auf, 2-Propansulfonsäure weist einen pKs₁-Wert von -1,79 auf, Butansulfonsäure weist einen pKs₁-Wert von -1,68 auf, Ethansulfonsäure weist einen pKs₁-Wert von -1,68 auf, 1-Propansulfonsäure weist einen pKs₁-Wert von -1,49 auf, Octansulfonsäure weist einen pKs₁-Wert von -1,41 auf, Oxalsäure weist einen pKs₁-Wert von 1,25 auf und Quadratsäure weist einen pKs₁-Wert von 1,5 auf. Maleinsäure wird in einer Konzentration von ≥ 99 % eingesetzt, die eingesetzte Menge in den Beispielen bezieht sich daher auf ≥ 99 % Maleinsäure. Oxalsäure wird in einer Konzentration von ≥ 98 % eingesetzt, die eingesetzte Menge in den Beispielen bezieht sich daher auf ≥ 98 % Oxalsäure. Quadratsäure wird in einer Konzentration von ≥ 98 % eingesetzt, die eingesetzte Menge in den Beispielen bezieht sich daher auf ≥ 98 % Quadratsäure. Methansulfonsäure wird in einer Konzentration von 70 % eingesetzt, die eingesetzte Menge in den Beispielen bezieht sich daher auf 70 % Methansulfonsäure. Die Konzentrationsangaben in den Patentansprüchen und der Beschreibung beziehen sich jeweils auf 100 % Aktivgehalt der Säure, soweit nicht anders angegeben.

Bevorzugte Säuren sind Maleinsäure, Oxalsäure und Methansulfonsäure, einzeln oder in Kombination, da diese auf Grund Ihrer toxikologischen Werte in den eingesetzten Konzentrationen gegebenenfalls nicht gekennzeichnet werden müssen. Dabei sind Oxalsäure und Methansulfonsäure besonders bevorzugt.

In einer Ausführungsform enthält das Desinfektionsmittel als einwertigen Alkohol Ethanol, 1-Propanol, 2-Propanol oder eine Mischung hiervon und als Säure Maleinsäure, Methansulfonsäure, Oxalsäure, Quadratsäure oder eine Mischung hiervon. Bei der Säuremischung kann es sich zum Beispiel um Maleinsäure und Quadratsäure oder um Oxalsäure und Quadratsäure handeln. Ebenso kann es sich bei der Säuremischung beispielsweise um Maleinsäure und Oxalsäure, um Maleinsäure und Methansulfonsäure oder um Oxalsäure und Methansulfonsäure handeln.

In einer weiteren Ausführungsform enthält das Desinfektionsmittel als einwertigen Alkohol Ethanol, 1-Propanol, 2-Propanol oder eine Mischung hiervon und als Säure Methansulfonsäure und keine anderen Säuren mit einem pKs- Wert von kleiner als 2.3.

Das Desinfektionsmittel weist bevorzugt einen pH-Wert von kleiner als 4,5 auf, mehr bevorzugt einen pH-Wert zwischen 1,5 und 3,0, besonders bevorzugt zwischen 2,0 und 3,0 und ganz besonders bevorzugt zwischen 2,0 und 2,5. Bei einem pH-Wert größer als 2 muss vorteilhafterweise keine persönliche Schutzausrüstung (PSA) getragen werden.

Das Desinfektionsmittel kann einen oder mehrere Hilfsstoffe ausgewählt aus der Gruppe bestehend aus pH-Stellmittel, Komplexbildner, Tensid, Korrosionsinhibitor, Parfüm und Farbstoff enthalten. Bevorzugt enthält das Desinfektionsmittel als Hilfsstoffe nur pH-Stellmittel und/oder Komplexbildner. Besonders bevorzugt enthält das Desinfektionsmittel keine Hilfsstoffe.

Falls Hilfsstoffe im erfindungsgemäßen Desinfektionsmittel enthalten sind, sind sie vorzugsweise in folgenden Mengen vorhanden:
- pH Stellmittel in einer Menge von 0,01 bis 3,0 Gew.-%,
- Komplexbildner in einer Menge von 0,1 bis 5,0 Gew.-%,
- Tenside in einer Menge von 0,1 bis 10 Gew.-%,
- Korrosionsinhibitoren in einer Menge von 0,1 bis 1,0 Gew.-%,
- Parfüm in einer Menge von 0,01 bis 1,0 Gew.-% und
- Farbstoffe in einer Menge von bis zu 0,5 Gew.-%.

In einer Ausführungsform besteht das Desinfektionsmittel aus

| | |
|---|---|
| 15 bis 50 Gew.-%, | bevorzugt 20 bis 50 Gew.-%, mindestens eines einwertigen Alkohols mit 2 bis 4 Kohlenstoffatomen, |
| 0,1 bis 3,0 Gew.-%, | bevorzugt 0,2 bis 2,0 Gew.-% mindestens einer Säure mit einem pKs-Wert von kleiner als 2,3 ausgewählt aus der Gruppe bestehend aus organischen Disäuren und Sulfonsäuren, |
| 0 bis 0,5 Gew.-% | eines weiteren antimikrobiellen Wirkstoffs, |
| 0 bis 5,0 Gew.-% | Hilfsstoffe, bevorzugt 0 Gew.-% Hilfsstoffe, und Wasser, |

wobei sich die Komponenten zu 100 Gew.-% ergänzen.

In einer weiteren Ausführungsform besteht das Desinfektionsmittel aus

| | |
|---|---|
| 25 bis 50 Gew.-% | mindestens eines einwertigen Alkohols ausgewählt aus Ethanol, 1-Propanol und 2-Propanol, |
| 0,2 bis 2,0 Gew.-% | mindestens einer Säure mit einem pKs-Wert von kleiner als 2,3 ausgewählt aus der Gruppe bestehend aus Maleinsäure, Methansulfonsäure, Oxalsäure und Quadratsäure, |
| 0 bis 5,0 Gew.-% | Hilfsstoffe, bevorzugt 0 Gew.-% Hilfsstoffe, und Wasser, |

wobei sich die Komponenten zu 100 Gew.-% ergänzen.

In einer weiteren Ausführungsform besteht das Desinfektionsmittel aus

| | |
|---|---|
| 25 bis 50 Gew.-% | mindestens eines einwertigen Alkohols ausgewählt aus Ethanol, 1-Propanol und 2-Propanol, |
| 0,2 bis 2,0 Gew.-% | Methansulfonsäure und keine andere Säure mit einem pKs-Wert von kleiner als 2,3, |
| 0 bis 5,0 Gew.-% | Hilfsstoffe, bevorzugt 0 Gew.-% Hilfsstoffe, und Wasser, |

wobei sich die Komponenten zu 100 Gew.-% ergänzen.

Das erfindungsgemäße Desinfektionsmittel kann nur aus Wasser, einwertigen Alkohol(en) und starken Säure(n) bestehen und keine weiteren Inhaltsstoffe, wie Hilfsstoffe oder Wirkstoffe enthalten. Da die Alkohole und Wasser rückstandlos verdampfen hat diese Ausführungsform den Vorteil, dass besonders wenig Rückstände auf der desinfizierten Oberfläche verbleiben.

In einer Ausführungsform weist das Desinfektionsmittel etwa 50 Gew.-% einwertige Alkohole, maximal 2 Gew.-% der Säure(n) und einen pH-Wert von etwa 3,0 auf und wird als Desinfektionsmittel für belebte Oberflächen verwendet.

In einer weiteren Ausführungsform enthält das Desinfektionsmittel einen antimikrobiellen Wirkstoff neben den einwertigen Alkoholen, insbesondere N-Alkylaminopropylglycin, auch unter der ECHA-Bezeichnung Amines, N-C10-16-alkyltrimethylenedi-, reaction products with chloroacetic acid bekannt (CAS-Nr. 139734-65-9). Wenn N-Alkyaminopropylglycin enthalten ist, enthält das Desinfektionsmittel N-Alkylaminopropylglycin bevorzugt in einer Menge von 0,1 bis 0,5 Gew.-%. Die Menge an eingesetztem zusätzlichen Wirkstoff darf nicht zu groß sein, damit der Rückstand klein bleibt. Bei Verwendung eines zusätzlichen antimikrobiellen Wirkstoffs kann die Säurekonzentration niedriger sein.

Bevorzugt enthält das Desinfektionsmittel keine quartären Ammoniumverbindungen, keine Aldehyde, keine Guanidine, kein Aktivchlor, keine Amine, keine Sauerstoffabspalter, keine aromatischen Alkohole, keine Metallionen und keine Kombinationen dieser Wirkstoffe. Besonders bevorzugt enthält das Desinfektionsmittel keine anderen antimikrobiellen Wirkstoffe als einwertige Alkohole mit 2 bis 4 Kohlenstoffatomen. Das Desinfektionsmittel enthält zudem bevorzugt keine kationischen Oligomere und Polymere, insbesondere keine kationischen Oligomere oder kationischen Polymere auf Basis von Polysacchariden.

Das Desinfektionsmittel enthält zudem vorzugsweise keine toxikologisch bedenklichen Inhaltsstoffe, weshalb es auch bei entsprechend niedrigem pH-Wert ohne persönliche Schutzausrüstung angewendet werden kann und eine einfache und unbedenkliche Benutzung ermöglicht.

Das erfindungsgemäße Desinfektionsmittel wird bevorzugt zur Desinfektion unbelebter Flächen, besonders zur Flächendesinfektion, verwendet. Hierfür ist ein wenig Rückstand hinterlassendes Desinfektionsmittel vorteilhaft. Da Wasser und Alkohol flüchtig sind, verbleibt als Rückstand somit nur die Säure und ggf. eingesetzte nichtflüchtige Komponenten. Das Desinfektionsmittel hinterlässt auf den desinfizierten Flächen, insbesondere unbelebten Oberflächen, nur geringe Rückstände, da nur wenige nichtflüchtige Bestandteile enthalten sind. Es zeigt zudem eine gute Materialverträglichkeit, insbesondere eine bessere Materialverträglichkeit gegenüber empfindlichen Oberflächen als hochalkoholische Desinfektionsmittel.

Das Desinfektionsmittel zeigt ein breites Wirkspektrum und kurze Einwirkzeiten. Überraschend konnte beobachtet werden, dass durch Zugabe von geringen Mengen an starken organischen Säuren mit einem pKs-Wert ≤ 2,3 eine signifikante antimikrobielle Wirksamkeitssteigerung erreicht werden kann. Die eingesetzten Säuren sind nicht als antimikrobielle Wirkstoffe (z. B. Biocidal Products Regulation Annex 1: Milchsäure, (+)-Weinsäure, Essigsäure, Propionsäure, Ascorbinsäure sowie Natriumsalze von Essigsäure und Benzoesäure) bekannt. Die Säuren verstärken in synergistischer Weise die Wirksamkeit der Alkohole, wobei die Alkohole alleine in den eingesetzten Konzentrationen von ≤ 50 Gew.-% keine ausreichende Wirksamkeit gegen Viren bei kurzen Einwirkzeiten aufweisen.

Zur Messung der viruziden Wirksamkeit wurde u.a. die Wirksamkeit gegen Adenovirus getestet. Die Überprüfung der Wirksamkeit gegen Adenovirus erfolgte nach der EN14476 unter hoher Belastung (dirty conditions). Dabei konnte für das erfindungsgemäße Desinfektionsmittel eine ausreichende Wirksamkeit gegen Adenovirus innerhalb von 60 s belegt werden. Zudem konnte für das erfindungsgemäße Desinfektionsmittel auch eine sehr schnelle Wirksamkeit gegen Poliovirus nachgewiesen werden. Auch gegen murines Norovirus (MNV) ist das Desinfektionsmittel innerhalb von 60 s wirksam (RF ≥ 4). Das Desinfektionsmittel kann somit als "viruzid" bzw. "begrenzt viruzid plus" ausgelobt werden. Eine Auslobung als "begrenzt viruzid plus" ist zulässig bei einer bestätigten Wirksamkeit gegen Adenovirus und murines Norovirus, wobei die Wirksamkeit gegen Adenovirus meist der limitierende Faktor ist. Eine Auslobung als "viruzid" ist zulässig bei einer bestätigten Wirksamkeit gegen Adeno- und Poliovirus sowie murines Norovirus. Zusätzlich weist das Desinfektionsmittel eine Wirksamkeit in 60 s auch gegenüber Mykobakterium terrae auf und kann somit als "tuberkulozid" ausgelobt werden.

Gegenstand der Erfindung ist weiterhin ein Desinfektionsmittelkonzentrat zur Herstellung eines Desinfektionsmittels gemäß einem der Patentansprüche 1 bis 14 oder wie vorstehend beschrieben. Das Desinfektionsmittel ist in diesem Fall eine wässrige Anwendungslösung, die das Desinfektionsmittelkonzentrat und Wasser enthält, bevorzugt aus einer Mischung des Desinfektionsmittelkonzentrats und Wasser besteht.

Weiterhin ist Gegenstand der Erfindung ein Trägermaterial, vorzugsweise ein Wischtuch, das vorgetränkt ist mit einem Desinfektionsmittel gemäß einem der Patentansprüche 1 bis 14 oder mit einem Desinfektionsmittelkonzentrat gemäß Anspruch 15 oder wie vorstehend beschrieben.

Das flüssige Desinfektionsmittel kann in Form eines vorgetränkten, geeigneten Trägermaterials zur Wischdesinfektion verwendet werden, wobei das Trägermaterial bevorzugt aus synthetischem Kunststoff aus der Gruppe Polyester, Polyamid, Polyurethan, Polyethylen, Polypropylen, Polytetrafluorethylen (PTFE), vorzugsweise Polyester gebildet wird. Das Trägermaterial ist beispielsweise ein Tuch, ein Schwamm oder eine andere Applikationshilfe, bevorzugt ein Wischtuch. Es können auch Tücher aus natürlichen Materialien, z. B. Cellulose (Lyocell), die mit der Desinfektionsmittellösung kompatibel sind, verwendet werden. Das erfindungsgemäß verwendete Desinfektionsmittel wird bevorzugt in Form eines Schaums, einer Flüssigkeit oder in Form eines mit dem Desinfektionsmittel imprägnierten Tuchs, Schwamms oder anderer Applikationshilfe appliziert. Das Desinfektionsmittel kann direkt, ohne weitere Verdünnungen, auf die zu behandelnde Fläche gebracht werden.

Zudem betrifft die Erfindung eine Verwendung eines Desinfektionsmittels wie vorstehend beschrieben oder nach einem der Ansprüche 1 bis 14 oder eines Trägermaterials nach Anspruch 16 zur Desinfektion einer belebten oder unbelebten Oberfläche, bevorzugt einer unbelebten Oberfläche und insbesondere zur Flächendesinfektion.

Die Verwendung des Desinfektionsmittels kann innerhalb von 60 sec mindestens eine log 4 Reduktion gegenüber Adenovirus gemessen gemäß der Prüfnorm EN14476 bewirken. Bevorzugt bewirkt die Verwendung des Desinfektionsmittels oder des mit Desinfektionsmittel getränkten Trägermaterials mindestens eine log 4 Reduktion innerhalb von 60s gegenüber Adenovirus, murines Norovirus und Poliovirus gemessen gemäß der Prüfnorm EN14476.

### Beispiele

Es wurden Desinfektionsmittel mit den in Tabelle 1a bis 1c angegebenen Zusammensetzungen hergestellt und ihre antimikrobielle Wirksamkeit getestet. Die Abkürzung "n.b." steht für "nicht bestimmt". Die Rezepturen V1 und V2 in Tabelle 1c sind Vergleichsrezepturen und stellen keine erfindungsgemäßen Desinfektionsmittel dar. Die angegebene Menge von 0,286 Gew.-% der Methansulfonsäure im Beispiel entspricht einem Aktivgehalt von 0,2 Gew.-% Säure.

**Tabelle 1a: Rezepturen der hergestellten Desinfektionsmittel (alle Angaben in Gew.-%) und gemessener pH-Wert des Desinfektionsmittels**

| **Beispiel** | **1** | **2** | **3** | **4** | **5** | **6** |
|---|---|---|---|---|---|---|
| Maleinsäure ≥99% | 0,505 | 1,010 | -- | 0,404 | 0,152 | -- |
| Oxalsäure ≥98% | -- | -- | -- | -- | -- | 0,153 |
| Quadratsäure ≥98% | -- | -- | 0,306 | -- | 0,153 | 0,153 |
| Ethanol 99% (vergällt mit 2-Butanon) | 44,444 | 44,444 | 44,444 | 20,741 | 44,444 | 20,741 |
| Isopropanol | -- | -- | -- | 14,667 | -- | 14,667 |
| n-Propanol | -- | -- | -- | 8,800 | -- | 8,800 |
| Dest. Wasser | 55,051 | 54,546 | 55,250 | 55,388 | 55,251 | 55,486 |
| Gesamt (Gew.-%) | 100 | 100 | 100 | 100 | 100 | 100 |
| pH-Wert, frisch | 2,1 | 2,0 | 2,1 | 2,1 | 2,2 | 2,1 |

**Tabelle 1b: Rezepturen der hergestellten Desinfektionsmittel (alle Angaben in Gew.-%) und gemessener pH-Wert des Desinfektionsmittels**

| **Beispiel** | **7** | **8** | **9** | **10** | **11** | **12** | **13** |
|---|---|---|---|---|---|---|---|
| Maleinsäure ≥99% | 0,152 | -- | -- | -- | -- | -- | 0,404 |
| Methansulfonsäure 70% | -- | 0,286 | -- | 0,286 | 0,286 | 0,286 | -- |
| Oxalsäure ≥98% | -- | -- | -- | -- | -- | -- | -- |
| Quadratsäure ≥98% | 0,153 | -- | 0,204 | -- | -- | -- | -- |
| Ethanol 99% (vergällt mit 2-Butanon) | 20,741 | 44,444 | 14,140 | -- | -- | -- | 14,140 |
| Isopropanol | 14,667 | -- | 10,000 | -- | -- | -- | 10,00 |
| n-Propanol | 8,800 | -- | 6,000 | 25,000 | 30,000 | 44,000 | 6,000 |
| Dest. Wasser | 55,487 | 55,270 | 69,656 | 74,714 | 69,714 | 55,714 | 69,456 |
| Gesamt (Gew.-%) | 100 | 100 | 100 | 100 | 100 | 100 | 100 |
| pH-Wert, frisch | 2,1 | 2,1 | 2,05 | 2,07 | 2,08 | 2,07 | 2,07 |

**Tabelle 1c: Rezepturen der hergestellten Desinfektionsmittel (alle Angaben in Gew.-%) und gemessener pH-Wert des Desinfektionsmittels**

| **Beispiel** | **14** | **V1** | **V2** |
|---|---|---|---|
| Maleinsäure ≥99% | -- | -- | -- |
| Methansulfonsäure 70% | -- | -- | -- |
| Oxalsäure ≥98% | 0,306 | -- | -- |
| Quadratsäure ≥98% | -- | -- | -- |
| Malonsäure ≥99% | -- | -- | 0,505 |
| Ethanol 99% (vergällt mit 2-Butanon) | 44,444 | 44,444 | 44,444 |
| Isopropanol | -- | -- | -- |
| n-Propanol | -- | -- | -- |
| Dest. Wasser | 55,250 | 55,556 | 55,051 |
| Gesamt (Gew.-%) | 100 | 100 | 100 |
| pH-Wert, frisch | 2,1 | n.b. | 2,6 |

### Prüfung Wirksamkeit gegenüber Adenovirus

Es wurde die Wirksamkeit der hergestellten Desinfektionsmittel gegenüber Adenovirus Typ 5, Stamm Adenoid 75, gemäß der Prüfnorm EN14476:2013+A2:2019 bestimmt.

**Tabelle 2a: Wirksamkeiten gegen Adenovirus, c = 97%; dirty condition, T = 20 °C, EN 14476:2013+A2:2019**

| **Beispiel** | **1** | **2** | **3** | **4** | **5** | **6** | **7** | **8** | **V1** | **V2** |
|---|---|---|---|---|---|---|---|---|---|---|
| Einwirkzeit 30s | 3,63 | n.b. | 4,00 | 3,88 | 3,50 | 4,00 | 4,00 | 3,88 | 0,25 | n.b. |
| Einwirkzeit 60s | 4,00 | 4,38 | 4,00 | 4,00 | 4,00 | 4,00 | 4,00 | 4,00 | 0,25 | 1,25 |

**Tabelle 2b: Wirksamkeiten gegen Adenovirus, c = 97%; dirty condition, T = 20°C, EN 14476:2013+A2:2019**

| **Beispiel** | **9** | **10** | **11** | **12** | **13** | **14** |
|---|---|---|---|---|---|---|
| Einwirkzeit 1 min | 3,25 | ≥ 4,13 | ≥ 4,13 | ≥ 4,13 | 3,38 | 4,00 |
| Einwirkzeit 2 min | ≥ 4,38 | ≥ 4,13 | ≥ 4,13 | ≥ 4,13 | ≥ 4,38 | n.b. |
| Einwirkzeit 3 min | ≥ 4,38 | ≥ 4,13 | ≥ 4,13 | ≥ 4,13 | ≥ 4,38 | n.b. |

Es zeigt sich, dass die getesteten Rezepturen 1 bis 8, 10 bis 12 und 14 in 60 s gegen Adenovirus wirksam sind (RF ≥ 4). Die Wirksamkeit wurde sowohl für Rezepturen mit nur einer Säure (Beispiele 1 bis 4, 8, 10 bis 12 und 14) als auch für Mischungen der Säuren sowie Mischungen der Alkohole (Beispiele 5 bis 7) erreicht. Ebenso konnte bei einer niedrigen Konzentration Alkohol (Beispiele 9 und 13) eine ausreichende Wirksamkeit gegen Adenovirus nachgewiesen werden. Auch eine niedrige Konzentration Säure mit einer niedrigen Konzentration Alkohol (Beispiele 10 und 11) zeigt bei einer geringen Einwirkzeit von 1 min eine Wirksamkeit. Ethanol in einer Konzentration unter 50 Gew.-% (Beispiel V1) ist nicht wirksam. Auch Malonsäure (pks von 2,8; Beispiel V2) zeigt in Kombination mit Ethanol nicht die gewünschte Wirksamkeit.

### Prüfung Wirksamkeit gegenüber Poliovirus

Es wurde zusätzlich die Wirksamkeit der hergestellten Desinfektionsmittel gegenüber Poliovirus Typ 1, Stamm LSc-2ab, gemäß der Prüfnorm EN14476:2013+A2:2019 bestimmt.

**Tabelle 3: Wirksamkeiten gegen Poliovirus, c = 97%; dirty condition, T = 20°C, EN 14476:2013+A2:2019**

| **Beispiel** | **3** | **5** | **6** | **14** | **V1** | **V2** |
|---|---|---|---|---|---|---|
| Einwirkzeit 30s | 4,00 | 3,00 | 2,13 | 1,75 | n.b. | n.b. |
| Einwirkzeit 60s | 4,00 | 4,25 | 4,25 | 4,00 | n.b. | n.b. |

Die getesteten Desinfektionsmittel waren in 60 s gegen Poliovirus wirksam. Die Ergebnisse dokumentieren, dass eine einzelne Säure alleine in Kombination mit einem Alkohol und auch Mischungen von Säuren bzw. Alkoholen eine sehr schnelle Wirksamkeit gegen Poliovirus aufweisen.

### Prüfung Wirksamkeit gegenüber murines Norovirus (MNV)

Es wurde zusätzlich die Wirksamkeit der hergestellten Desinfektionsmittel gegenüber murines Norovirus, Isolat S99 Berlin, gemäß der Prüfnorm EN14476 bestimmt.

**Tabelle 4: Wirksamkeiten gegen MNV, c = 97%; dirty condition, T = 20°C, EN 14476:2013+A2:2019**

| **Beispiel** | **1** | **3** | **4** | **5** | **6** | **7** | **8** | **14** | **V1** | **V2** |
|---|---|---|---|---|---|---|---|---|---|---|
| Einwirkzeit 30s | 2,13 | 4,38 | 2,38 | 4,00 | 4,38 | 4,38 | 2,25 | 2,00 | n.b. | n.b. |
| Einwirkzeit 60s | 4,38 | 4,38 | 4,25 | 4,38 | 4,38 | 4,38 | 4,25 | 4,13 | n.b. | n.b. |

Alle getesteten Desinfektionsmittel sind in 60 s gegen murines Norovirus wirksam (RF ≥ 4). Die Wirksamkeit wird sowohl durch die Kombination von nur einer Säure mit einem Alkohol als auch durch Mischungen der Säuren sowie Mischungen der Alkohole erreicht.

### Prüfung Wirksamkeit gegenüber M. terrae

Es wurde zusätzlich die Wirksamkeit der hergestellten Desinfektionsmittel gegenüber M.terrae (dirty condition) gemäß EN14348:2005 bestimmt.

Eine Probe des zu prüfenden Produktes wird mit einer Mykobakteriensuspension versehen und dieses Gemisch bei der Prüftemperatur gehalten. Nach ausgewählten und festgelegten Einwirkzeiten wird eine aliquote Menge des Gemisches mit validierten Verfahren sofort neutralisiert, um die vorhandene Tuberkulozidie zu überprüfen. In jeder Probe werden die Koloniezahlen bestimmt und deren Verminderung gegenüber der Ausgangskoloniezahl berechnet. Das Verfahren der Wahl ist das Verdünnungs-Neutralisations-Verfahren. Nur wenn kein geeignetes Neutralisationsmittel gefunden wurde, darf das Membranfiltrations-Verfahren angewendet werden.

**Tabelle 5: Wirksamkeiten gegen M.terrae, c = 97 %, dirty condition, T = 20°C, EN14348:2005**

| **Beispiel** | **1** | **3** | **4** | **14** | **V1** | **V2** |
|---|---|---|---|---|---|---|
| Einwirkzeit 97% 1 min | 6,16 | 6,16 | 6,16 | 6,16 | n.b. | n.b. |

Die Wirksamkeit in 60 s konnte auch exemplarisch an Mykobakterium terrae (relevant für Auslobung "tuberkulozid") bestätigt werden. Alle getesteten Rezepturen sind bei einer Konzentration von 97 % im Suspensionsversuch wirksam.

Sämtliche aus den Ansprüchen und der Beschreibung hervorgehenden Merkmale und Vorteile, einschließlich Konzentrationsbereichen, Zusammensetzungen und Verfahrensschritten, können sowohl für sich als auch in den verschiedensten Kombinationen erfindungswesentlich sein.

## Patentansprüche

1. Niedrigalkoholisches Desinfektionsmittel, umfassend
- 15 bis 50 Gew.-% mindestens eines einwertigen Alkohols mit 2 bis 4 Kohlenstoffatomen,
- 0,1 bis 3,0 Gew.-% mindestens einer Säure mit einem pKs-Wert von kleiner als 2,3 ausgewählt aus der Gruppe bestehend aus organischen Disäuren und organischen Sulfonsäuren,
- optional mindestens einen Hilfsstoff und
- Wasser.

2. Desinfektionsmittel nach Anspruch 1, wobei der Alkohol in einer Menge von 20 bis 50 Gew.-%, insbesondere 25 bis 50 Gew.-%, im Desinfektionsmittel enthalten ist.

3. Desinfektionsmittel nach Anspruch 1 oder 2, wobei das Desinfektionsmittel einen oder mehrere Alkohole ausgewählt aus der Gruppe bestehend aus Ethanol, 1-Propanol und 2-Propanol enthält.

4. Desinfektionsmittel nach einem der vorhergehenden Ansprüche, wobei das Desinfektionsmittel als einwertigen Alkohol nur Ethanol oder als einwertige Alkohole eine Kombination von Ethanol, 1-Propanol und 2-Propanol enthält.

5. Desinfektionsmittel nach einem der vorhergehenden Ansprüche, wobei das Desinfektionsmittel die Säure in einer Menge von 0,2 bis 3,0 Gew. %, insbesondere 0,2 bis 1,0 Gew.-%, enthält.

6. Desinfektionsmittel nach einem der vorhergehenden Ansprüche, wobei die Säure einen pKs-Wert von kleiner als 2,0 aufweist.

7. Desinfektionsmittel nach einem der vorhergehenden Ansprüche, wobei das Desinfektionsmittel eine oder mehrere Säuren ausgewählt aus der Gruppe bestehend aus Maleinsäure, Methansulfonsäure, Ethansulfonsäure, 2-Propansulfonsäure, Butansulfonsäure, 1-Propansulfonsäure, Octansulfonsäure, Oxalsäure und Quadratsäure enthält.

8. Desinfektionsmittel nach einem der vorhergehenden Ansprüche, wobei das Desinfektionsmittel als einwertigen Alkohol Ethanol, 1-Propanol, 2-Propanol oder eine Mischung hiervon und als Säure Maleinsäure, Methansulfonsäure, Oxalsäure, Quadratsäure oder eine Mischung hiervon enthält.

9. Desinfektionsmittel nach einem der vorhergehenden Ansprüche, wobei das Desinfektionsmittel einen pH-Wert von kleiner als 4,5 aufweist, bevorzugt einen pH-Wert zwischen 1,5 und 3,0.

10. Desinfektionsmittel nach einem der vorhergehenden Ansprüche, wobei das Desinfektionsmittel besteht aus
| | |
|---|---|
| 15 bis 50 Gew.-%, | bevorzugt 20 bis 50 Gew.-%, mindestens eines einwertigen Alkohols mit 2 bis 4 Kohlenstoffatomen, |
| 0,1 bis 3,0 Gew.-%, | bevorzugt 0,2 bis 2,0 Gew.-% mindestens einer Säure mit einem pKs-Wert von kleiner als 2,3 ausgewählt aus der Gruppe bestehend aus organischen Disäuren und Sulfonsäuren, |
| 0 bis 0,5 Gew.-% | eines weiteren antimikrobiellen Wirkstoffs, |
| 0 bis 5,0 Gew.-% | Hilfsstoffe, bevorzugt 0 Gew.-% Hilfsstoffe, und Wasser, |
wobei sich die Komponenten zu 100 Gew.-% ergänzen.

11. Desinfektionsmittel nach einem der vorhergehenden Ansprüche, wobei das Desinfektionsmittel als Hilfsstoffe nur pH Stellmittel und/oder Komplexbildner enthält.

12. Desinfektionsmittel nach einem der vorhergehenden Ansprüche, wobei das Desinfektionsmittel einen weiteren antimikrobiellen Wirkstoff, insbesondere N-Alkylaminopropylglycin, enthält.

13. Desinfektionsmittel nach Anspruch 12, wobei das Desinfektionsmittel N-Alkylaminopropylglycin in einer Menge von 0,1 bis 0,5 Gew.-% enthält.

14. Desinfektionsmittel nach einem der vorhergehenden Ansprüche, wobei das Desinfektionsmittel keine quartären Ammoniumverbindungen, keine Aldehyde, keine Guanidine, kein Aktivchlor, keine Amine, keine Sauerstoffabspalter, keine aromatischen Alkohole, keine Metallionen und keine Kombinationen dieser Wirkstoffe enthält.

15. Desinfektionsmittelkonzentrat zur Herstellung eines Desinfektionsmittels gemäß einem der Patentansprüche 1 bis 14, wobei das Desinfektionsmittel eine wässrige Anwendungslösung ist, enthaltend Desinfektionsmittelkonzentrat und Wasser, bevorzugt bestehend aus einer Mischung des Desinfektionsmittelkonzentrats und Wasser.

16. Trägermaterial, vorzugsweise Wischtuch, das vorgetränkt ist mit einem Desinfektionsmittel gemäß einem der Patentansprüche 1 bis 14 oder mit einem Desinfektionsmittelkonzentrat gemäß Anspruch 15.

17. Verwendung eines Desinfektionsmittels oder eines Trägermaterials nach einem der Ansprüche 1 bis 14 oder 16 zur Desinfektion einer unbelebten Oberfläche, insbesondere zur Reduktion des Adenovirus gemäß EN 14476 um mindestens 4 log-Stufen.
